# EUROPÄISCHE PATENTSCHRIFT

(11) **EP 2 330 296 B1**
(45) Veröffentlichungstag und Bekanntmachung des Hinweises auf die Patenterteilung: **21.12.2016**
(21) Anmeldenummer: 10014171.2
(22) Anmeldetag: 30.10.2010
(51) Int. Cl.: F03D 7/02

(54) **Verfahren zum Betrieb einer drehzahlgeregelten Windenergieanlage sowie eine solche Windenergieanlage**
Method for operating a speed regulated wind turbine and wind turbine
Procédé de fonctionnement d'une éolienne à régulation de vitesse et une telle éolienne

(30) Priorität: 04.12.2009 DE 102009057062
(43) Veröffentlichungstag der Anmeldung: 08.06.2011
(73) Patentinhaber: Nordex Energy GmbH, 22419 Hamburg (DE)
(72) Erfinder: Merkel, Maximilian, 21149 Hamburg (DE)
(74) Vertreter: Hauck Patentanwaltspartnerschaft mbB

(56) Entgegenhaltungen:
- WO-A2-2010/135552
- DE-A1-102006 001 613
- DE-A1-102006 034 251
- DE-U1-202005 014 265

## Beschreibung

Die vorliegende Erfindung betrifft ein Verfahren zum Betrieb einer Windenergieanlage mit einem drehzahlgeregelten Rotor, einer Betriebsführung und einem Sicherheitssystem ebenso wie eine solche Windenergieanlage.

Die Richtlinie des Germanischen Lloyds GL Wind 2003 IV, Teil 1, Kapitel 2 (2.2 Betriebsführung und Sicherheitssystem) definiert Anforderungen an eine Betriebsführung und ein Sicherheitssystem einer drehzahlgeregelten Windenergieanlage. So heißt es in der Richtlinie, dass die Aufgabe der Betriebsführung darin besteht, die Windenergieanlage effektiv, möglichst störungsfrei, lastarm und sicher zu betreiben. Die Logik des Verfahrens wird dabei in eine Steuerung oder Regelung übertragen, die in der Betriebsführung abläuft. Zu dem Sicherheitssystem ist definiert, dass dieses ein zu der Betriebsführung logisch übergeordnetes System ist, welches anspricht, nachdem sicherheitsrelevante Grenzwerte überschritten wurden oder falls das Betriebsführungssystem nicht in der Lage ist, die Anlage im normalen Betriebsbereich zu halten. Im Hinblick auf die Drehzahl des Rotors definiert die GL-Richtlinie eine minimale Betriebsdrehzahl n₁ und eine maximale Betriebsdrehzahl n₃, zwischen denen die Drehzahl sich bei normalen Betriebsbedingungen befinden soll. Ferner ist eine Abschaltdrehzahl n₄ definiert, hierbei handelt es sich um die Drehzahl, die eine sofortige Abschaltung der Windenergieanlage durch die Betriebsführung erforderlich macht. Die Abschaltdrehzahl n₄ ist von der Auslösedrehzahl nₐ zu unterscheiden. Bei dieser handelt es sich um diejenige Drehzahl, bei der eine sofortige Auslösung des Sicherheitssystems erfolgen muss. Hierzu schreibt die Richtlinie ferner vor, dass die das Sicherheitssystem auslösenden Grenzwerte so festzulegen sind, dass die dem Entwurf der Windenergieanlage zugrunde gelegten Werte nicht überschritten und die Anlage nicht gefährdet wird, aber auch so, dass die Betriebsführung während des Normalbetriebs nicht durch das Sicherheitssystem unnötig gestört wird. Andere Richtlinien wie die IEC 61400-1, Teil 1, Auslegungsanforderungen (IEC 61400-1 : 2005) schreiben ähnliche Sicherheitsanforderungen vor.

Aus DE 10 2008 012 957 A1 ist ein Verfahren zum Betreiben einer Windenergieanlage bekannt. Das Verfahren kennt zwei Betriebsmodi, die sich durch ein unterschiedliches Abbremsverhalten der Windenergieanlage unterscheiden. In einem Betriebsmodus wird der Abbremsvorgang des Rotors eingeleitet, wenn ein Drehzahlgrenzwert überschritten wird. In einem zweiten Betriebsmodus wird der Abbremsvorgang eingeleitet, wenn ein zweiter Drehzahlgrenzwert, der kleiner als der Drehzahlgrenzwert des ersten Betriebsmodus ist, überschritten wird und/oder wenn im ersten und/oder zweiten Betriebsmodus eine Rotorbeschleunigung auftritt, die größer als ein Rotorbeschleunigungsgrenzwert ist.

Aus DE 10 2006 001 613 B4 ist ein Verfahren zum Betreiben einer Windenergieanlage mit einer Betriebsführung und einem Sicherheitssystem bekannt, wobei ein Abbremsen des Rotors über eine Winkelverstellung des Blatteinstellwinkels mit einer mittleren Winkelverstellgeschwindigkeit von weniger als 8,5 °/s des wenigstens einen Rotorblatts nach Auftritt eines Störsignals erfolgt. Das Abbremsen des Rotors erfolgt dann über eine mechanische Bremsvorrichtung, sobald die Drehzahl des Rotors eine vorgebbare erste Drehzahlgrenze überschreitet. Das Sicherheitssystem ist so ausgelegt, dass es ausgelöst wird, sobald die Drehzahl des Rotors eine vorgebbare zweite Drehzahlgrenze überschreitet, die größer ist als die erste Drehzahlgrenze. Die zweite Drehzahlgrenze ist dabei so gewählt, dass bei funktionstüchtiger Windenergieanlage auch bei Lastabwurf des Generators kombiniert mit einer extremen Windböe, deren Auftrittswahrscheinlichkeit weniger als einmal in drei Monaten beträgt, das Sicherheitssystem nicht ausgelöst wird.

Ferner wird in diesem Dokument bereits angesprochen, dass das Sicherheitssystem eine Sicherheitsüberwachung aufweist, die auch die Betriebsführungseinrichtung auf ihre Funktionalität hin überprüfen kann.

Aus DE 10 2006 034 251 A1 ist eine Windenergieanlage sowie ein Verfahren zu deren Betreiben bekannt, bei der ein Sicherheitssystem vorgesehen ist, das auf ein Überschreiten von sicherheitsrelevanten Grenzwerten anspricht oder das in dem Fall anspricht, in dem das Betriebsführungssystem die Führung der Windenergieanlage verliert.

Aus DE 20 2005 014 629 U1 ist eine Sicherheitseinrichtung für Windenergieanlagen bekannt, bei der das Auslösen einer Sicherheitskette nicht selektiv für das Überschreiten einzelner Grenzwerte erfolgt, sondern durch eine Schutzeinrichtung mehrere feste Grenzwerte logisch miteinander verknüpfen kann, um die Sicherheitskette auszulösen.

Aus Siegfried Heier, Windkraftanlagensystemauslegung, Netzintegration und Regelung, 4. Auflage, Teubner Verlag ist aus Kapitel 5.6.2 bekannt, bei Volllast der Anlage, d. h. bei Geschwindigkeiten über dem Nennbereich, die Drehzahl durch Verstellen des Blattwinkels im Regelbereich zu halten. Eine Regelreserve erlaubt ein verzögertes Reagieren auf Drehzahlerhöhungen. Sollte die Drehzahl dennoch über die höchste zulässige Betriebsdrehzahl, beispielsweise 10 % über den Nennwert, steigen, wird eine Störabschaltung eingeleitet. Sollte der Rotor trotz Eingriff der Betriebsführung zu schnell drehen und die Auslösedrehzahl erreichen, muss das Sicherheitssystem drehzahlbegrenzend einwirken. Ein Eingriff des Sicherheitssystems führt dann sofort zu einer Notabschaltung.

Der Erfindung liegt die Aufgabe zugrunde, eine Windenergieanlage sowie ein Verfahren zum Betrieb einer Windenergieanlage bereitzustellen, bei der bzw. bei dem die Lasten für die Windenergieanlage gesenkt und ein unnötiges Auslösen des Sicherheitssystems vermieden werden.

Die Aufgabe wird erfindungsgemäß durch ein Verfahren mit den Merkmalen aus Anspruch 1 sowie durch eine Windenergieanlage mit den Merkmalen aus Anspruch 5 gelöst. Vorteilhafte Ausgestaltungen bilden den Gegenstand der Unteransprüche.

Das erfindungsgemäße Verfahren dient zum Betrieb einer Windenergieanlage mit einem drehzahlgeregelten Rotor, einer Betriebsführung und einem Sicherheitssystem. Das Verfahren weist den Verfahrensschritt auf, einen Bremsvorgang für den Rotor der Windenergieanlage durch die Betriebsführung auszulösen, wenn die Drehzahl des Rotors einen ersten Schwellwert (n_{c1}) überschreitet. Erfindungsgemäß löst das Sicherheitssystem das Abbremsen des Rotors ebenfalls aus, wenn die Drehzahl einen zweiten Schwellwert (nₛ₁) überschreitet und nur wenn die Betriebsführung bei Überschreiten des ersten Schwellwerts (n_{c1}) keinen Bremsvorgang eingeleitet hat. Der zweite Schwellwert (nₛ₁) ist erfindungsgemäß größer als der erste Schwellwert (n_{c1}). Das erfindungsgemäße Sicherheitssystem stellt sicher, dass bei einem Fehler in der Betriebsführung, wenn durch die Betriebsführung nicht ordnungsgemäß ein Bremsvorgang eingeleitet wird, bereits bei dem zweiten Schwellwert (nₛ₁) ein Abbremsen durch das Sicherheitssystem eingeleitet wird. Da bei diesem zweiten Schwellwert das Sicherheitssystem nur ausgelöst wird, wenn kein Bremsvorgang durch die Betriebsführung ausgelöst wurde, kann dieser zweite Schwellwert niedriger als herkömmliche Schwellwerte für das Sicherheitssystem gewählt werden. Der besondere Vorteil des erfindungsgemäßen Sicherheitssystems liegt darin, dass für Drehzahlen oberhalb des zweiten Schwellwerts (nₛ₁) stets sichergestellt ist, dass ein Bremsen des Rotors der Windenergieanlage erfolgt. Mithin kann für die Dimensionierung der Windenergieanlage der zweite Schwellwert (nₛ₁) als derjenige Schwellwert angenommen werden, für den sichergestellt ist, dass ein Bremsen eingeleitet wird. Da dieser Schwellwert kleiner ist als ein herkömmlicher Schwellwert, können somit Belastungen für die Windenergieanlage verringert und diese kostengünstiger ausgelegt werden, ohne dass ein Risiko hierdurch entsteht.

In dem erfindungsgemäßen Verfahrens erfolgt zudem ein Auslösen des Sicherheitssystems unabhängig davon, ob die Betriebsführung bereits einen Bremsvorgang ausgelöst hat oder nicht, wenn die Drehzahl des Rotors einen dritten Schwellwert (nₛ₂) überschreitet. Der dritte Schwellwert (nₛ₂) ist größer als der zweite Schwellwert (nₛ₁) und somit auch größer als der erste Schwellwert (n_{c1}). Der Vorteil, einen weiteren Schwellwert für das Sicherheitssystem vorzusehen, liegt darin, dass das Sicherheitssystem auf jeden Fall zuverlässig erfasst, ob ein besonderer Zustand, mit hohen Drehzahlen, an der Windenergieanlage aufgetreten ist. Selbst wenn durch die Betriebsführung der Bremsvorgang ausgelöst wurde, registriert das Sicherheitssystem das Auftreten von Drehzahlen größer als der dritte Schwellwert (nₛ₂).

In einer bevorzugten Ausgestaltung steuern die Betriebsführung und das Sicherheitssystem zum Abbremsen des Rotors den Blatteinstellwinkel von mindestens einem Rotorblatt an. Der Blatteinstellwinkel wird dabei so gestellt, dass das aus dem Wind aufgenommene Drehmoment reduziert und so die Drehzahl bevorzugt bis zum Stillstand vermindert wird. Alternativ oder zusätzlich können auch elektrische oder hydraulische Bremsen an der Windenergieanlage eingesetzt werden, um die Drehzahl des Rotors zu reduzieren.

In einer zweckmäßigen Ausgestaltung ist nach einem Auslösen des Sicherheitssystems vor einem erneuten Betrieb der Windenergieanlage diese auf etwaige Schäden zu überprüfen. Erst nach erfolgter Überprüfung kann die Windenergieanlage wieder in Betrieb genommen werden, wobei grundsätzlich die Überprüfung durch einen Servicetechniker vor Ort oder eine geeignete Ferninspektion erfolgen kann.

Die erfindungsgemäße Aufgabe wird ebenfalls durch eine Windenergieanlage mit den Merkmalen aus Anspruch 5 gelöst. Die erfindungsgemäße Windenergieanlage weist einen drehzahlgeregelten Rotor, eine Betriebsführung und ein Sicherheitssystem auf. Für die Betriebsführung ist ein erster Schwellwert (n_{c1}) für die Drehzahl des Rotors definiert, bei dessen Überschreiten die Betriebsführung einen Bremsvorgang auslöst. Für das Sicherheitssystem ist ein zweiter Schwellwert (nₛ₁) definiert, bei dessen Überschreiten das Sicherheitssystem ein Abbremsen des Rotors auslöst, aber nur wenn die Betriebsführung kein Abbremsen des Rotors ausgelöst hat. Sofern das Sicherheitssystem bei Überschreiten des zweiten Schwellwerts (nₛ₁) feststellt, dass die Betriebsführung bereits einen Bremsvorgang eingeleitet hat, wird der Bremsvorgang durch das Sicherheitssystem nicht ausgelöst. Wie bereits bei dem erfindungsgemäßen Verfahren erläutert, ist bei der Windenergieanlage sichergestellt, dass bei einem Überschreiten des zweiten Schwellwerts (nₛ₁) der Bremsvorgang ausgelöst wird, entweder durch die Betriebsführung bei dem ersten Schwellwert n_{c1} oder durch das Sicherheitssystem bei dem zweiten Schwellwert nₛ₁. Die erfindungsgemäße Windenergieanlage kann somit für die Drehzahl des zweiten Schwellwerts (nₛ₁) ausgelegt werden, wobei der zweite Schwellwert (nₛ₁) dann den Lastfall definiert, ab dem auch bei fehlerhafter Betriebsführung der Bremsvorgang eingeleitet wird.

Erfindungsgemäß ist für das Sicherheitssystem zusätzlich ein dritter Schwellwert (nₛ₂) definiert, bei dessen Überschreiten das Sicherheitssystem ein Abbremsen des Rotors auslöst, wobei der dritte Schwellwert (nₛ₂) größer als der zweite Schwellwert (nₛ₁) und somit auch größer als der erste Schwellwert (n_{c1}) ist. Wie bereits bei dem erfindungsgemäßen Verfahren erläutert, erfolgt bei Überschreiten des dritten Schwellwerts (nₛ₂) eine unbedingte Auslösung des Sicherheitssystems, während beim Überschreiten des zweiten Schwellwerts (nₛ₁) erfindungsgemäß eine bedingte Auslösung des Sicherheitssystems erfolgt, wenn die Betriebsführung den Bremsvorgang nicht ausgelöst hat.

In einer bevorzugten Ausgestaltung ist für das Abbremsen des Rotors eine Steuer- und/oder Regeleinheit vorgesehen, die bidirektional mit dem Sicherheitssystem verbunden ist, wobei die Steuer- und/oder Regeleinheit ein Brems signal von dem ausgelösten Sicherheitssystem empfängt und das Sicherheitssystem das Bremssignal von der Steuer- und/oder Regeleinheit empfängt. Hierdurch wird gewährleistet, dass ein an der Steuer- und/oder Regeleinheit anliegendes Brems signal ebenfalls stets an dem Sicherheitssystem anliegt. In einer alternativen, ebenfalls bevorzugten Ausgestaltung ist die Betriebsführung mit dem Sicherheitssystem verbunden und legt ein Bremssignal für die Steuer- und/oder Regeleinheit stets auch an dem Sicherheitssystem an.

Bevorzugt weist die Steuer- und/oder Regeleinheit eine Rotorblattverstelleinrichtung auf, die für mindestens ein Rotorblatt den Blatteinstellwinkel verstellt.

Die Erfindung wird nachfolgend anhand einiger Ausführungsbeispiele näher erläutert.
- Fig. 1: zeigt in einer schematischen Blockansicht die Betriebsführung und das Sicherheitssystem einer drehzahlgeregelten Windenergieanlage gemäß der Erfindung,
- Fig. 2: zeigt in einer schematischen Blockansicht die Betriebsführung und das Sicherheitssystem einer drehzahlgeregelten Windenergieanlage in einer alternativen Ausgestaltung,
- Fig. 3: zeigt in einer schematischen Blockansicht die Betriebsführung und das Sicherheitssystem einer drehzahlgeregelten Windenergieanlage gemäß Stand der Technik,
- Fig. 4: zeigt die Entwicklung der Drehzahl über der Zeit bei einer 50-Jahres-Böe gemäß Stand der Technik,
- Fig. 5: zeigt wie in Fig. 4 die Entwicklung der Drehzahl über der Zeit bei einer 50-Jahres-Böe, wenn das Sicherheitssystem gemäß der Erfindung ein Bremsen durch die Betriebsführung erkennt und nicht auslöst,
- Fig. 6: zeigt die Entwicklung der Drehzahl über der Zeit gemäß Stand der Technik, wenn ein Fehler in der Betriebsführung auftritt, der zu einem Drehzahlanstieg führt und das Sicherheitssystem die Bremsung auslöst,
- Fig. 7: zeigt die Entwicklung der Drehzahl über der Zeit, wenn ein Fehler in der Betriebsführung auftritt, der zu einem Drehzahlanstieg führt und gemäß der Erfindung das Sicherheitssystem die Bremsung auslöst, und
- Fig. 8: zeigt die Entwicklung der Drehzahl über der Zeit bei einer 50-Jahres-Böe, wenn trotz ausgelöster Bremsung durch die Betriebsführung das Sicherheitssystem ausgelöst wird.

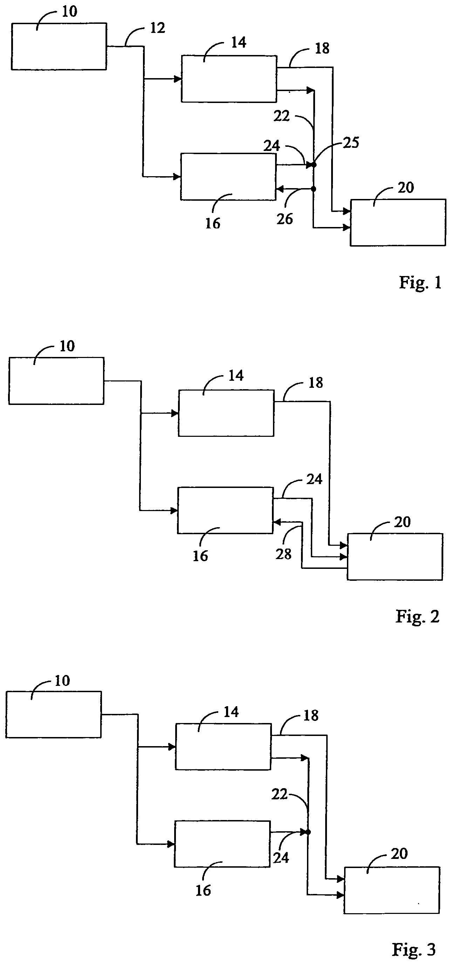

Fig. 1 zeigt in einer schematischen Blockansicht den Aufbau und die Datenwege für die Betriebsführung 14 und das Sicherheitssystem 16. Eine Sensorik 10 erfasst die an der Rotorwelle auftretende Drehzahl. Die Drehzahl wird über die Datenleitung 12 an die Betriebsführung 14 und das Sicherheitssystem 16 weitergeleitet. Die Betriebsführung 14 vergleicht den über die Datenleitung 12 anliegenden Wert für die Drehzahl mit einem ersten Schwellwert n_{c1}, der die maximale Drehzahl für die Windenergieanlage definiert. Über einen Datenbus 18 setzt die Betriebsführung 14 ein Bremssignal für die Aktorik 20 ab. Bei der Aktorik 20 handelt es sich um eine Einrichtung zur Einstellung des Blatteinstellwinkels, mit der das Rotorblatt um seine Längsachse gedreht werden kann, um mehr oder weniger Drehmoment aus dem Wind aufzunehmen. Parallel zu dem Datenbus 18 ist von der Betriebsführung 14 zu der Aktorik 20 eine Leitung 22 vorgesehen, über die ein Spannungssignal an die Aktorik 20 gegeben werden kann. Das über die Leitung 22 an der Aktorik 20 anliegende Spannungssignal löst unabhängig von den über den Datenbus anliegenden Daten ein Verstellen des Rotorblatts in seine Fahnenposition aus. Die Signale werden innerhalb der Aktorik 20 so verarbeitet, dass ein über die Leitung 22 anliegendes Spannungssignal stets den Daten aus dem Datenbus 18 übergeordnet ist.

An dem Sicherheitssystem 16 liegt ebenfalls eine von der Sensorik 10 gemessene Drehzahl der Rotorwelle über die Datenleitung 12 an. Das Sicherheitssystem 16 vergleicht den anliegenden Drehzahlwert mit dem zweiten Schwellwert nₛ₁ und kann diesen auch mit dem dritten Schwellwert nₛ₂ vergleichen, wie nachfolgend noch im Detail beschrieben wird. Das Sicherheitssystem 16 löst ein Spannungssignal aus, das über die Verbindungsleitung 24 und die Leitung 22 an der Aktorik 20 anliegt, um den Bremsvorgang auszulösen. Gleichzeitig ist eine weitere Leitung 26 vorgesehen, die die Leitung 22 mit dem Sicherheitssystem 16 verbindet, so dass das Sicherheitssystem feststellen kann, ob von der Betriebsführung 14 über die Datenleitung 22 bereits ein Bremssignal an die Aktorik 20 angelegt wurde. Die Betriebsführung 14 und das Sicherheitssystem 16 sind über die Leitungen 22 und 26 direkt miteinander verbunden. Ab dem Punkt 25 kann das Sicherheitssystem 16 das Bremssignal über die Signalleitung 22 unabhängig von der Betriebsführung 14 sicherstellen.

Fig. 2 zeigt eine alternative Ausgestaltung für die Verbindung der Betriebsführung 14 und des Sicherheitssystems 16 mit der Aktorik 20, bei der die Betriebsführung 14 und das Sicherheitssystem 16 über die Aktorik 20 miteinander verbunden sind. Die Betriebsführung 14 kann über einen Datenbus 18 ein Bremssignal an die Aktorik 20 anlegen. Das Sicherheitssystem 16 kann über seine Leitung 24 ebenfalls ein Bremssignal an die Aktorik 20 anlegen, wobei das über das Sicherheitssystem 16 und die Leitung 24 angelegte Signal in der Aktorik 20 stets Vorrang über ein über den Datenbus 18 anliegendes Signal hat. Um dem Sicherheitssystem 16 die Information zur Verfügung zu stellen, dass an der Aktorik 20 bereits ein Bremssignal anliegt, ist eine Datenleitung 28 vorgesehen, die die Aktorik 20 mit dem Sicherheitssystem 16 verbindet.

Fig. 3 zeigt in einer schematischen Ansicht die in dem Stand der Technik bekannte Verschaltung der Betriebsführung 14 und des Sicherheitssystems 16. Demnach legt die Betriebsführung 14 über den Datenbus 18 ein Bremssignal an die Aktorik 20 an. Über die Leitung 22 kann die Betriebsführung 14 ein Spannungssignal an die Aktorik 20 anlegen, das einen Bremsvorgang auslöst. Das Sicherheitssystem 16 kann über die Verbindungsleitung 24 ebenfalls ein Spannungssignal an die Aktorik 20 anlegen, um so den Bremsvorgang auszulösen.

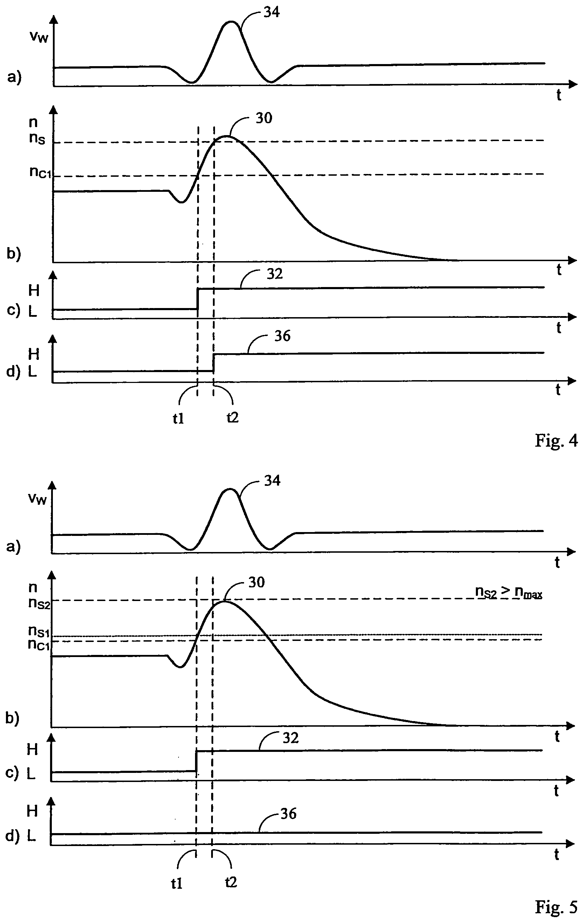

Das erfindungsgemäße Verfahren wird nachfolgend anhand der Fig. 4 bis 6 näher beschrieben.

Fig. 4 zeigt die Entwicklung der Drehzahl über der Zeit, wobei die Schwellwerte nₛ und n_{c1} beispielhaft eingetragen sind Ein herkömmliches Verfahren nach dem Stand der Technik wird in Fig. 4 an dem Beispiel einer 50-Jahres-Böe erläutert. In Fig. 4 ist zu erkennen, dass der zeitliche Verlauf der Drehzahl im Zeitpunkt t₁ den Schwellwert n_{c1} überschreitet. Wie bei dem zeitlichen Verlauf 32 des Bremssignals der Betriebsführung zu erkennen ist, löst die Betriebsführung zum Zeitpunkt t₁ ein Bremssignal aus. Da die Windgeschwindigkeit 34 nach dem Zeitpunkt t₁ weiter deutlich ansteigt, steigt die Drehzahl 30 trotz des eingeleiteten Bremsvorgangs über einen Schwellwert nₛ. Das Sicherheitssystem löst bei Überschreiten des Schwellwerts nₛ zum Zeitpunkt t₂ aus, was durch den Verlauf des Bremssignals des Sicherheitssystems 36 in Fig. 4d dargestellt ist.

Fig. 5 zeigt das Szenario einer 50-Jahres-Böe, wie auch in Fig. 4 dargestellt, jedoch bei dem erfindungsgemäßen Verfahren. Der Schwellwert n_{c1} in der Fig. 5b entspricht dem Schwellwert n_{c1} in Fig. 4b. Hier wird zum Zeitpunkt t₁ der Bremsvorgang durch die Betriebsführung ausgelöst, wie an der Kurve 32 in Fig. 5 c zu erkennen ist. Die Drehzahl 30 in Fig. 5b übersteigt anschließend den zweiten Schwellwert nₛ₁ bei dem erfindungsgemäßen Verfahren. In diesem Zeitpunkt überprüft das Sicherheitssystem, ob der Bremsvorgang bereits ausgelöst wurde. Da in dem dargestellten Beispiel der Bremsvorgang bereits zum Zeitpunkt t₁ ausgelöst wurde, erfolgt bei Überschreiten des Schwellwerts nₛ₁ keine Auslösung des Sicherheitssystems. Die Drehzahl steigt bei dem Beispiel in Fig. 5b weiter an und erreicht nicht den Schwellwert nₛ₂, so dass keine Auslösung des Sicherheitssystems erfolgt. Der entsprechende Verlauf des Bremssignals des Sicherheitssystems 36 in Fig. 5d bleibt somit flach und zeigt kein Signal. Ein Vergleich der Fign. 4 und 5 macht deutlich, dass bei dem erfindungsgemäßen Verfahren ein unnötiges Auslösen des Sicherheitssystems vermieden wird. Durch Verwendung von zwei Schwellwerten für das Sicherheitssystem ist es möglich, den Schwellwert nₛ₂, bei dem die unbedingte Auslösung des Sicherheitssystems erfolgt, höher zu setzen als bei herkömmlichen Verfahren, wo der Schwellwert für die Auslösung des Sicherheitssystems nₛ niedriger gesetzt sein muss. Die Möglichkeit, nₛ₂ höher anzusetzen als bei herkömmlichen Verfahren, ergibt sich unmittelbar aus der Überlegung, dass selbst im Fall, dass die Betriebsführung fehlerhaft arbeitet, durch den Schwellwert nₛ₁ bereits eine frühere Bremsung des Rotors sichergestellt ist. Daher kann der Schwellwert nₛ₂ höher als bei herkömmlichen Systemen gesetzt werden. Bei herkömmlichen Systemen erfolgt die Setzung des Schwellwertes für das Eingreifen des Sicherheitssystems vergleichsweise früher als beim erfindungsgemäßen Verfahren, da auch für den Fall des Ausfalls der Betriebsführung sichergestellt werden muss, dass ein Bremsvorgang ausgelöst wird. Dies ist aber bei dem erfindungsgemäßen Verfahren bereits durch den niedrigen der beiden Schwellwerte des Sicherheitssystems gewährleistet.

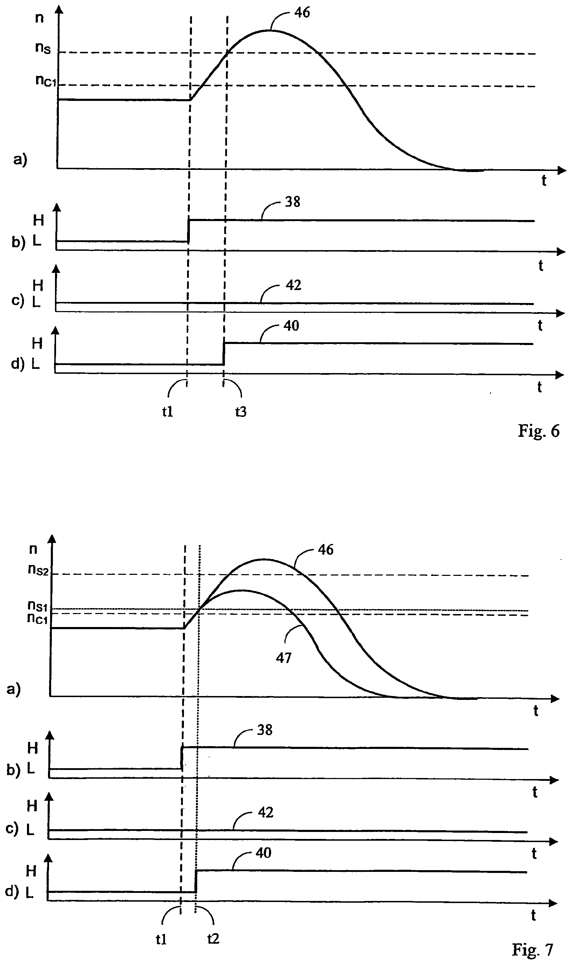

Fig. 6 zeigt das herkömmliche Verfahren bei einem Fehler in der Betriebsführung, der zu einem Anstieg der Drehzahl führt. In dieser Situation wurde angenommen, dass ein Fehler 38 (Fig. 6b) in der Betriebsführung zum Zeitpunkt t₁ auftritt, so dass durch die Betriebsführung kein Bremssignal ausgeführt wird (Fig. 6c). Nachfolgend steigt die Drehzahl 46 an, wobei zum Zeitpunkt t₃ der Schwellwert nₛ überschritten wird und das Sicherheitssystem auslöst (Fig. 6d). Bei dem erfindungsgemäßen Sicherheitssystem gemäß Fig. 7 stellt das Sicherheitssystem zu dem Zeitpunkt t₂ fest, dass die Drehzahl angestiegen ist und kein Bremssignal 42 durch die Betriebsführung (Fig. 7c) erzeugt wurde. Im Zeitpunkt t₂ überschreitet die Drehzahl 47 den Schwellwert nₛ₁, der niedriger als der Schwellwert nₛ aus Fig. 6 ist. Das Sicherheitssystem löst somit zum Zeitpunkt t₂ das Bremssignal 40 aus, so dass die Drehzahl der Windenergieanlage den mit 47 dargestellten Verlauf nimmt (Fig. 7d). Lediglich zum Vergleich ist in Fig. 7a auch der Verlauf der Drehzahl 46 aus Fig. 6 dargestellt. Das herkömmliche Sicherheitssystem stellt erst bei dem Zeitpunkt t₃ fest, dass ein Schwellwert nₛ überschritten ist und löst erst zum Zeitpunkt t₃ das Bremssignal aus. Hierdurch nimmt die Drehzahl den mit 46 dargestellten Verlauf. Da der Fehler der Betriebsführung später (t₃ > t₂) erkannt wurde, wurde die Windenergieanlage größeren Belastungen ausgesetzt, da ein größerer Drehzahlwert 46 als bei dem erfindungsgemäßen Sicherheitssystem auftritt.

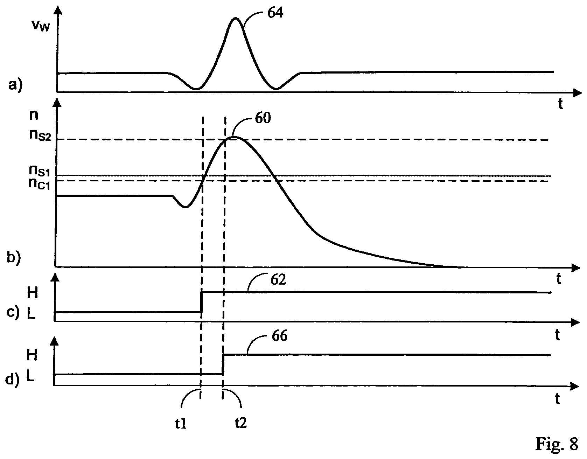

Fig. 8 zeigt den zeitlichen Verlauf der Drehzahl 60 bei Auftreten einer Böe 64, die stärker als eine 50-Jahres-Böe ist. Bei diesem Szenario wurde die Annahme getroffen, dass die Betriebsführung ordnungsgemäß arbeitet und daher bei Überschreiten des Schwellwerts n_{c1} zum Zeitpunkt t₁ ein Spannungssignal 62 auslöst (Fig. 8c). Danach überschreitet die Drehzahl 60 den Schwellwert nₛ₁ und das Sicherheitssystem stellt fest, dass bereits ein Bremssignal 62 erzeugt wurde und löst den Bremsvorgang nicht aus. Nachfolgend übersteigt bei der Böe 64 die Drehzahl 60 den zweiten Schwellwert nₛ₂ des Sicherheitssystems zum Zeitpunkt t₂. Zu diesem Zeitpunkt wird das Bremssignal 66 des Sicherheitssystems (Fig. 8d) ausgelöst, obwohl bereits das Bremssignal 62 an der Rotorblattverstelleinrichtung anliegt. Hierdurch kann sichergestellt werden, dass die Windenergieanlage nach Auftreten einer so starken Böe inspiziert werden muss, bevor sie wieder in Betrieb geht.

## Patentansprüche

1. Verfahren zum Betrieb einer Windenergieanlage mit einem drehzahlgeregelten Rotor, einer Betriebsführung (14) und einem Sicherheitssystem (16) zum Abbremsen des Rotors, das folgende Verfahrensschritte aufweist:
- Auslösen eines Bremsvorgangs für den Rotor der Windenergieanlage durch die Betriebsführung (14), wenn die Drehzahl des Rotors einen ersten Schwellwert (n_{c1}) überschreitet,
- Auslösen des Sicherheitssystems (16) zum Abbremsen des Rotors, wenn die Drehzahl des Rotors einen zweiten Schwellwert (nₛ₁) überschreitet und nur wenn die Betriebsführung (14) keinen Bremsvorgang eingeleitet hat, wobei der zweite Schwellwert (nₛ₁) größer als der erste Schwellwert (n_{c1}) ist und
- Auslösen des Sicherheitssystems (16), wenn die Drehzahl des Rotors einen dritten Schwellwert (nₛ₂) überschreitet, wobei der dritte Schwellwert (nₛ₂) größer als der zweite Schwellwert (nₛ₁) ist.

2. Verfahren nach Anspruch 1, **dadurch gekennzeichnet, dass** die Betriebsführung (14) und das Sicherheitssystem (16) zum Abbremsen des Rotors eine Rotorblattverstelleinrichtung an mindestens einem Rotorblatt ansteuern.

3. Verfahren nach einem der Ansprüche 1 oder 2, **dadurch gekennzeichnet, dass** die Betriebsführung (14) zum Abbremsen die Drehzahl des Rotors vermindert.

4. Verfahren nach einem der Ansprüche 1 bis 3, **dadurch gekennzeichnet, dass** das Sicherheitssystem (16) zum Abbremsen die Drehzahl des Rotors bis zum Stillstand des Rotors vermindert.

5. Windenergieanlage mit einem drehzahlgeregelten Rotor, einer Betriebsführung (14) und einem Sicherheitssystem (16) zum Abbremsen des Rotors, wobei für die Betriebsführung (14) ein erster Schwellwert (n_{c1}) für die Drehzahl des Rotors definiert ist, bei dessen Überschreiten die Betriebsführung (14) einen Bremsvorgang des Rotors auslöst,
wobei für das Sicherheitssystem (16) ein zweiter Schwellwert (nₛ₁) und ein dritter Schwellwert (nₛ₂) definiert sind, wobei der dritten Schwellwert (nₛ₂) größer als der zweite Schwellwert (nₛ₁) ist, dessen Wert größer als der erste Schwellwert (n_{c1}) ist, und das Sicherheitssystem (16) für Drehzahlwerte größer als der zweite Schwellwert (nₛ₁), aber nicht größer als der dritte Schwellwert (ns₂) nur dann auslöst, wenn die Betriebsführung (14) kein Abbremsen des Rotors ausgelöst hat und das Sicherheitssystem (16) ein Abbremsen des Rotors auslöst, wenn der dritte Schwellwert (nₛ₂) überschritten ist.

6. Windenergieanlage nach Anspruch 5, **dadurch gekennzeichnet, dass** eine für das Abbremsen des Rotors vorgesehene Steuer- und/oder Regeleinheit (20) bidirektional mit dem Sicherheitssystem (16) verbunden ist, wobei die Steuer- und/oder Regeleinheit (20) ein Bremssignal von dem ausgelösten Sicherheitssystem (16) empfängt und das Sicherheitssystem (16) das Bremssignal von der Steuer- und/oder Regeleinheit (20) empfängt.

7. Windenergieanlage nach Anspruch 6, **dadurch gekennzeichnet, dass** die Steuer- und/oder Regeleinheit (20) eine Rotorblattverstelleinrichtung aufweist, die für mindestens ein Rotorblatt den Rotorblatteinstellwinkel verstellt.

8. Windenergieanlage nach einem der Ansprüche 5 bis 7, **dadurch gekennzeichnet, dass** die Betriebsführung (14) mit dem Sicherheitssystem (16) verbunden ist und ein Bremssignal der Betriebsführung (14) an diesem anliegt.

## Claims

1. Method for operating a wind turbine with a speed-regulated rotor, operating management system (14) and safety system (16) for braking the rotor, comprising the following method steps:
- the operating management system (14) triggers a braking process for the rotor of the wind turbine when the rotary speed of the rotor exceeds a first threshold (n_{c1}),
- the safety system (16) is triggered to brake the rotor when the rotary speed exceeds a second threshold (nₛ₁) and only when the operating management system (14) has not initiated a braking process, wherein the second threshold (nₛ₁) is greater than the first threshold (n_{c1}), and
- the safety system (16) is triggered when the rotary speed of the rotor exceeds a third threshold (nₛ₂), wherein the third threshold (nₛ₂) is greater than the second threshold (nₛ₁).

2. The method according to claim 1, **characterized in that** the operating management system (14) and safety system (16) control a blade pitch mechanism on at least one rotor blade to brake the rotor.

3. The method according to one of claims 1 or 2, **characterized in that** for braking, the operating management system (14) reduces the rotary speed of the rotor.

4. The method according to one of claims 1 or 3, **characterized in that** for braking, the safety system (16) reduces the rotary speed of the rotor until the rotor comes to a standstill.

5. A wind turbine with a speed-regulated rotor, an operating management system (14) and a safety system (16) for braking the rotor, wherein a first threshold (n_{c1}) for the rotary speed of the rotor is defined for the operating management system (14), and when said threshold is exceeded, the operating management system (14) initiates a rotor braking process,
wherein
a second threshold (nₛ₁) and a third threshold (nₛ₂) are defined for the safety system (16), wherein the third threshold (nₛ₂) is greater than the second threshold (nₛ₁), the value of which is greater than the first threshold (n_{c1}), and the safety system (16) for rotary speed values greater than the second threshold (nₛ₁), but not greater than the third threshold (nₛ₂), is only triggered when the operating management system (14) has not triggered any braking of the rotor, and the safety system (16) triggers a braking of the rotor when the third threshold (nₛ₂) is exceeded.

6. The wind turbine according to claim 5, **characterized in that** a control and/or regulating unit (20) provided for braking the rotor is connected bidirectionally to the safety system (16), wherein the control and/or regulating unit (20) receives a braking signal from the triggered safety system (16), and the safety system (16) receives the braking signal from the control and/or regulating unit (20).

7. The wind turbine according to claim 6, **characterized in that** the control and/or regulating unit (20) has a blade pitch mechanism that adjusts the blade pitch for at least one rotor blade.

8. The wind turbine according to one of claims 5 to 7, **characterized in that** the operating management system (14) is connected to the safety system (16), and a braking signal from the operating management system (14) is applied thereto.

## Revendications

1. Procédé de fonctionnement d'une éolienne avec un rotor à vitesse de rotation réglée, une unité de gestion (14) et un système de sécurité (16) pour le ralentissement du rotor, qui présente les étapes de procédé suivantes :
- déclenchement d'un processus de freinage pour le rotor de l'éolienne par l'unité de gestion (14) quand la vitesse de rotation du rotor passe au-dessus d'une première valeur de seuil (n_{c1}),
- déclenchement du système de sécurité (16) pour le ralentissement du rotor quand la vitesse de rotation du rotor passe au-dessus d'une deuxième valeur de seuil (nₛ₁) et uniquement quand l'unité de gestion (14) n'a lancé aucun processus de freinage, la deuxième valeur de seuil (nₛ₁) étant plus élevée que la première valeur de seuil (n_{c1}), et
- déclenchement du système de sécurité (16) quand la vitesse de rotation du rotor passe au-dessus d'une troisième valeur de seuil (nₛ₂), la troisième valeur de seuil (nₛ₂) étant plus élevée que la deuxième valeur de seuil (nₛ₁).

2. Procédé selon la revendication 1, **caractérisé en ce que** l'unité de gestion (14) et le système de sécurité (16) pour le ralentissement du rotor commandent un dispositif de réglage de pale de rotor sur au moins une pale de rotor.

3. Procédé selon l'une des revendications 1 ou 2, **caractérisé en ce que**, pour le ralentissement, l'unité de gestion (14) réduit la vitesse de rotation du rotor.

4. Procédé selon l'une des revendications 1 à 3, **caractérisé en ce que**, pour le ralentissement, le système de sécurité (16) réduit la vitesse de rotation du rotor jusqu'à l'arrêt du rotor.

5. Eolienne avec un rotor à vitesse de rotation réglée, une unité de gestion (14) et un système de sécurité (16) pour le ralentissement du rotor, une première valeur de seuil (n_{c1}) pour la vitesse de rotation du rotor étant définie pour l'unité de gestion (14), l'unité de gestion (14) déclenchant un processus de freinage du rotor lors du passage au-dessus de cette première valeur de seuil,
une deuxième valeur de seuil (nₛ₁) et une troisième valeur de seuil (nₛ₂) étant définies pour le système de sécurité (16), la troisième valeur de seuil (nₛ₂) étant plus élevée que la deuxième valeur de seuil (nₛ₁), dont la valeur est plus élevée que la première valeur de seuil (n_{c1}), et le système de sécurité (16) ne déclenchant pour des valeurs de vitesse de rotation plus élevées que la deuxième valeur de seuil (nₛ₁) mais pas plus élevées que la troisième valeur de seuil (nₛ₂) que si l'unité de gestion (14) n'a pas déclenché de ralentissement du rotor, et le système de sécurité (16) déclenchant un ralentissement du rotor en cas de passage au-dessus de la troisième valeur de seuil (nₛ₂).

6. Eolienne selon la revendication 5, **caractérisée en ce qu'**une unité de commande et/ou de régulation (20) prévue pour le ralentissement du rotor est raccordée de façon bidirectionnelle au système de sécurité (16), l'unité de commande et/ou de régulation (20) recevant un signal de freinage de la part du système de sécurité (16) déclenché et le système de sécurité (16) recevant le signal de freinage de la part de l'unité de commande et/ou de régulation (20).

7. Eolienne selon la revendication 6, **caractérisée en ce que** l'unité de commande et/ou de régulation (20) présente un dispositif de réglage de pale de rotor qui règle l'angle de pas de pale de rotor pour au moins une pale de rotor.

8. Eolienne selon l'une des revendications 5 à 7, **caractérisée en ce que** l'unité de gestion (14) est raccordée au système de sécurité (16), et **en ce qu'**un signal de freinage de l'unité de gestion (14) est présent sur ce système.
